# EUROPÄISCHE PATENTANMELDUNG

(11) **EP 1 873 321 A2**
(43) Veröffentlichungstag der Anmeldung: **02.01.2008**
(21) Anmeldenummer: 07010308.0
(22) Anmeldetag: 24.05.2007
(51) Int. Cl.: E04B 7/02

(54) **Bauwerk mit einem, zumindest ein Solarelement aufweisenden Dach**

(30) Priorität: 27.06.2006 DE 102006029357
(71) Anmelder: Assmus, Eckhard, 77866 Rheinau-Holzhausen (DE)
(72) Erfinder: Assmus, Eckhard, 77866 Rheinau-Holzhausen (DE)
(74) Vertreter: Maucher, Wolfgang

(57) **Zusammenfassung**

Bei einem Bauwerk (1) mit einem, zumindest ein Solarelement aufweisenden Dach (2) ist zumindest ein, das wenigstens eine Solarelement aufweisende Teil (6) des Daches (2), unabhängig von der Lage, Ausrichtung und/oder Bauform des übrigen Baukörpers, in eine hinsichtlich des Sonneneinstrahlwinkels optimierten Richtung ausgerichtet (Figur 1).

## Beschreibung

Die Erfindung bezieht sich auf ein Bauwerk mit einem, zumindest ein Solarelement aufweisenden Dach.

Zur Energiegewinnung werden Dächer von Häusern häufig mit Solarelementen versehen. So ist beispielsweise aus der DE 24 43 029 ein Bauwerk mit Dachflächen unterschiedlicher Neigung bezüglich des Einfallswinkels der Sonne bekannt. Bei den verbreitetsten Dachformen, wie Satteldach oder Walmdach, verläuft der Dachfirst parallel zur Hauslängsseite. Je nach Lage des Hauses, die vielfach durch bauliche Vorschriften festgelegt ist, beispielsweise parallel zu einer Grundstücksgrenze, ist keine optimale Energieausbeute der Sonnenenergie möglich oder nur ein kleiner Teil der Dachfläche zur Bestückung mit Solarelementen geeignet, da das Sonnenlicht nur einen entsprechend kleinen Teil des Daches direkt bestrahlen kann.

Es besteht daher die Aufgabe, ein Bauwerk der eingangs genannten Art zu schaffen, das eine verbesserte Nutzung der Sonnenenergie ermöglicht.

Die erfindungsgemäße Lösung dieser Aufgabe besteht darin, dass das Dach einen Dachfirst aufweist, der etwa in Ost-West-Richtung ausgerichtet ist und/oder dass der Dachfirst eine Dachfläche begrenzt, sodass zumindest ein, das wenigstens eine Solarelement aufweisende Teil des Daches bzw. bzw. die Dachfläche, unabhängig von der Lage, Ausrichtung und/oder Bauform des übrigen Baukörpers, in eine hinsichtlich des Sonneneinstrahlwinkels optimierte Richtung ausgerichtet ist.

Die optimale Ausrichtung desjenigen Teiles des Daches, an dem das zumindest eine Solarelement vorgesehen ist, ist gegeben, wenn die Dachfläche zum Äquator hin ausgerichtet ist. Auf der Nordhalbkugel der Erde ist dies demnach eine Ausrichtung der betreffenden Dachfläche nach Süden, auf der Südhalbkugel entsprechend nach Norden. Selbst wenn der gesamte Baukörper mit seinen Wandelementen, beispielsweise durch örtliche Bauvorschriften, derart ausgerichtet ist, dass die betreffende Dachfläche bei einem klassischem Satteldach nicht exakt in Nord-Süd-Richtung verlaufen würde, kann durch die erfindungsgemäße Ausrichtung des Daches, unabhängig von der Ausrichtung des übrigen Baukörpers, eine optimierte Ausnutzung der Sonnenenergie unter Ausnutzung einer größtmöglichen Dachfläche erfolgen.

Als Solarelemente können insbesondere Solarzellen zur Stromgewinnung oder Solarkollektoren zur Erwärmung von Wasser oder anderen Wärmeträgern eingesetzt werden. Je nach Art des Solarelementes können auch mehrere, gegebenenfalls miteinander gekoppelte Solarelemente vorgesehen sein.

Da auch der Sonnenstand beziehungsweise der Einstrahlwinkel des Sonnenlichtes die Wirkungsweise und Effizienz eines Solarelementes beeinflusst und der Einstrahlwinkel des Sonnenlichtes auf die Erde abhängig ist von der geografischen Breite des jeweiligen Standortes, also der Entfernung vom Äquator, ist es zur Optimierung des Einstrahlwinkels des Sonnenlichtes auf das Solarelement zweckmäßig, wenn zumindest der das wenigstens eine Solarelement aufweisende Teil des Daches, unabhängig von der Lage, Ausrichtung und/oder Bauform des übrigen Baukörpers, in einer hinsichtlich des Sonneneinstrahlwinkels optimierten Neigung ausgerichtet ist. Je weiter entfernt der Baukörper von der Äquatoriallinie angeordnet ist, desto steiler wird die betreffende Dachfläche ausgerichtet. Beispielsweise würde eine Dachfläche eines Bauwerks in Südspanien eine um 3°-5° flachere Neigung aufweisen als ein entsprechendes Bauwerk in Deutschland.

Durch die größere Neigung oder Steilheit der Dachflächen in weiter nördlichen Gebieten, in denen gegenüber südlicheren Regionen vermehrt Schneefall auftritt, ergibt sich auch der Vorteil, dass auf dem Dach liegende Schneemassen schneller abrutschen und so auch die Solarelemente wieder freigegeben werden. Zudem ergibt sich ein statischer Vorteil, da durch das verbesserte und frühzeitigere Abrutschen von Schneemassen insgesamt eine geringere Schneemenge auf dem Dach ansammeln kann und dieses belastet, so dass das Dach für eine geringere Schneelast ausgelegt werden kann und somit konstruktiv einfacher und kostengünstiger realisiert werden kann.

Weitere Ausführungsformen eines erfindungsgemäßen Bauwerks ergeben sich aus den Unteransprüchen sowie der nachfolgend beschriebenen Zeichnung.

Es zeigt in schematischer Darstellung:
- Fig. 1: eine perspektivische Ansicht eines erfindungsgemäßen Bauwerks mit in hinsichtlich des Sonneneinstrahlwinkels optimierter Richtung ausgerichteter Dachfläche,
- Fig. 2: eine Aufsicht des Bauwerks aus Figur 1,
- Fig. 3: Seitenansichten des Bauwerks gemäß Figur 1,
- Fig. 4 bis Fig. 6: Ansichten entsprechend Figuren 1 bis 3 eines gegenüber Figuren 1 bis 3 modifizierten Bauwerks,
- Fig. 7 bis Fig. 9: Ansichten entsprechend Figuren 1 bis 3 eines weiteren Bauwerks, und
- Fig. 10 bis Fig. 12: Ansichten verschiedener Bauwerke gemäß dem Stand der Technik.

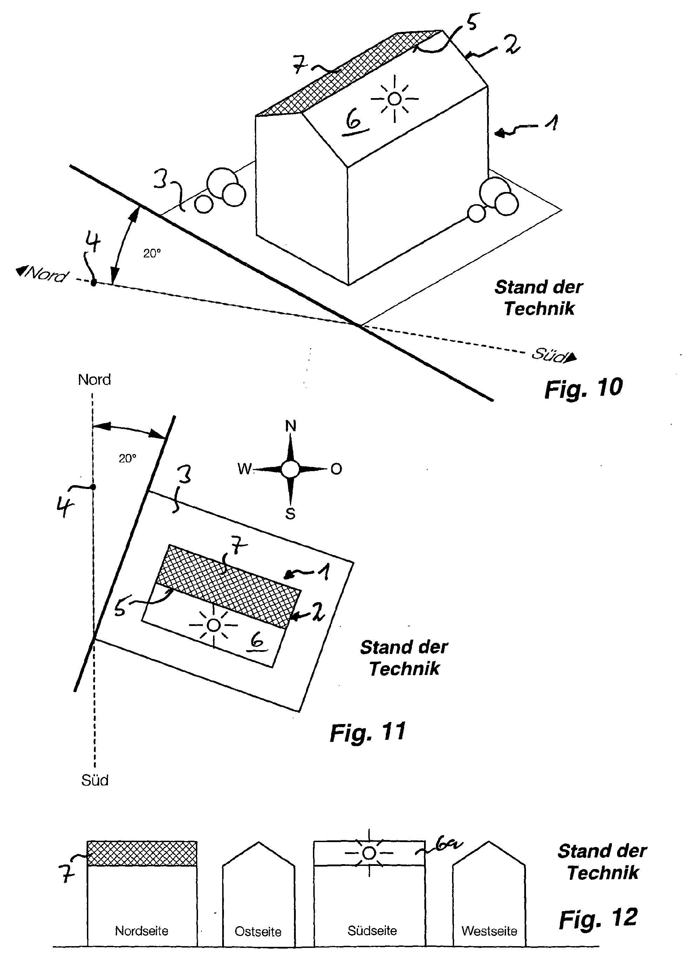

Ein im ganzen mit 1 bezeichnetes Bauwerk weist gemäß den Figuren 10 bis 12 ein Dach 2 auf, welches als herkömmliches Satteldach ausgebildet ist und dem bekannten Stand der Technik entspricht. Der Bauplatz 3 für den Baukörper 1 liegt 20° abweichend von der Nord-Süd-Achse 4. Nach örtlicher Bauvorschrift hat die Gebäudeausrichtung parallel zur Grundstücksgrenze zu erfolgen. Durch diese Abweichung von der Nord-Süd-Achse 4 sowie durch die Geometrie des Daches 2 mit einem Dachfirst 5, der mittig und parallel zur Gebäudelängsseite verläuft, ist die aus Süden betrachtete Dachfläche 6a (Figur 12), die die zur Sonnenenergiegewinnung nutzbare Dachfläche darstellt, gegenüber der tatsächlichen, südseitigen Dachfläche 6 erheblich reduziert. Zudem ist der Einstrahlwinkel der Sonnenstrahlen auf die Solarelemente nicht optimal. Die auf der Dachfläche 6 angeordneten, in den Figuren 10 bis 12 nicht näher dargestellten Solarelemente können somit nicht mit optimaler Energieausbeute betrieben werden. Die nordseitige, der Sonnenseite abgewandte Dachfläche 7 des Daches 2, die die Hälfte der gesamten Dachfläche ausmacht, ist zudem für die Solarenergiegewinnung gar nicht nutzbar.

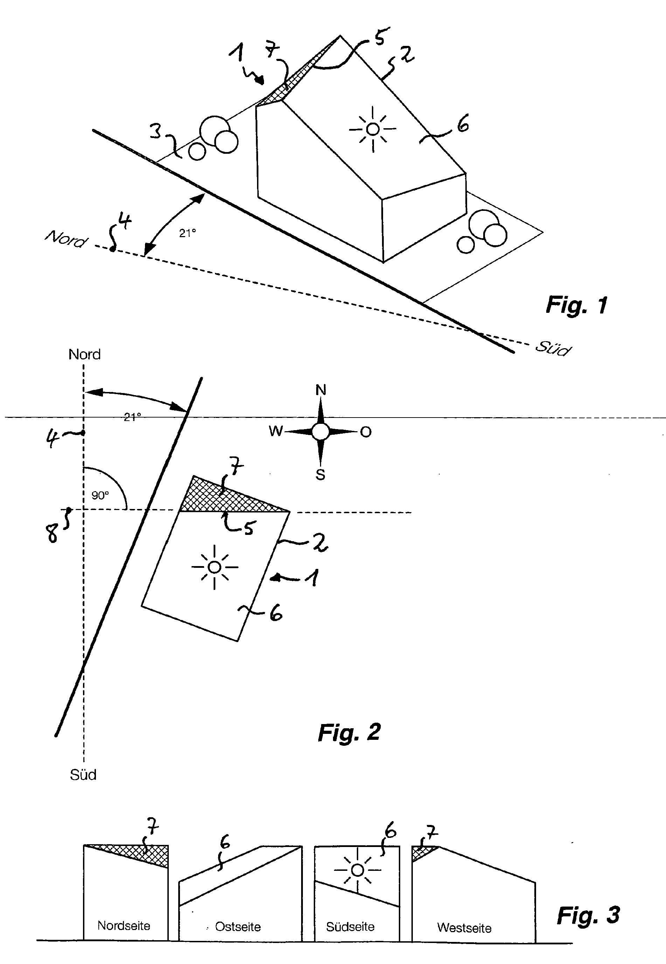

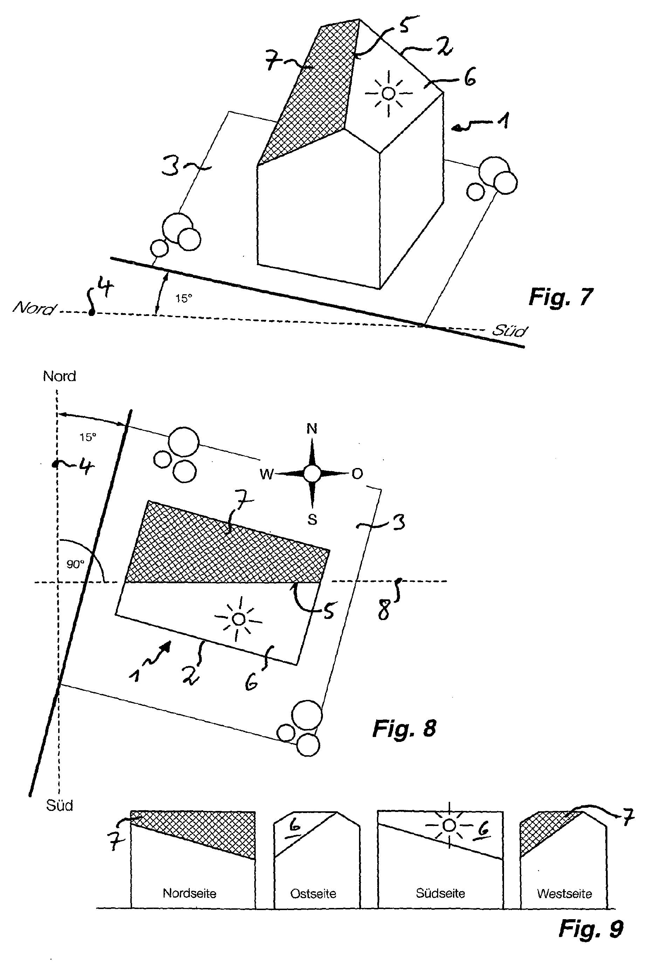

Eine verbesserte Energieausbeute ist bei den erfindungsgemäß ausgestalteten Bauwerken 1 und deren Dächern 2 gemäß Figuren 1 bis 9 gegeben.

Das Bauwerk 1 gemäß Figuren 1 bis 3 liegt mit seiner Längsrichtung 21° abweichend von der Nord-Süd-Achse 4. Um diese Abweichung des zugehörigen Baukörpers auszugleichen, ist die der Sonnenseite zugewandte, also nach Süden ausgerichtete Dachfläche 6 unabhängig von der Lage und Ausrichtung des übrigen Baukörpers exakt nach Süden ausgerichtet. Der Dachfirst 5 ist hierzu nicht parallel zu einer Hausseite, sondern schräg dazu in Ost-West-Richtung ausgerichtet, so dass die Firstlinie 8 senkrecht zur Nord-Süd-Achse 4 steht (Figur 2). Der gesamte Dachstuhl weist somit eine spezielle, asymmetrische Geometrie auf, die einen optimalen Einfall der Sonnenstrahlung auf die Dachfläche 6 mit den Solarelementen und somit eine optimale Energieausbeute ermöglicht.
Zur Vergrößerung der sonnenseitigen Dachfläche 6 ist der Dachfirst 5 zudem hinsichtlich des Baukörpers des Bauwerks 1 in Richtung zur sonnenabgewandten Seite des Baukörpers versetzt angeordnet. Somit nimmt die sonnenseitige Dachfläche 6 den größten Teil des Daches 2 ein, während die nördliche Dachfläche 7 demgegenüber stark zurückgenommen ist.

In Figur 3 sind Ansichten des Baukörpers des Bauwerks 1 aus den vier Himmelsrichtungen dargestellt, aus denen die effektive Größe der aus der jeweiligen Richtung betrachtet, wirksamen Dachfläche erkennbar ist.

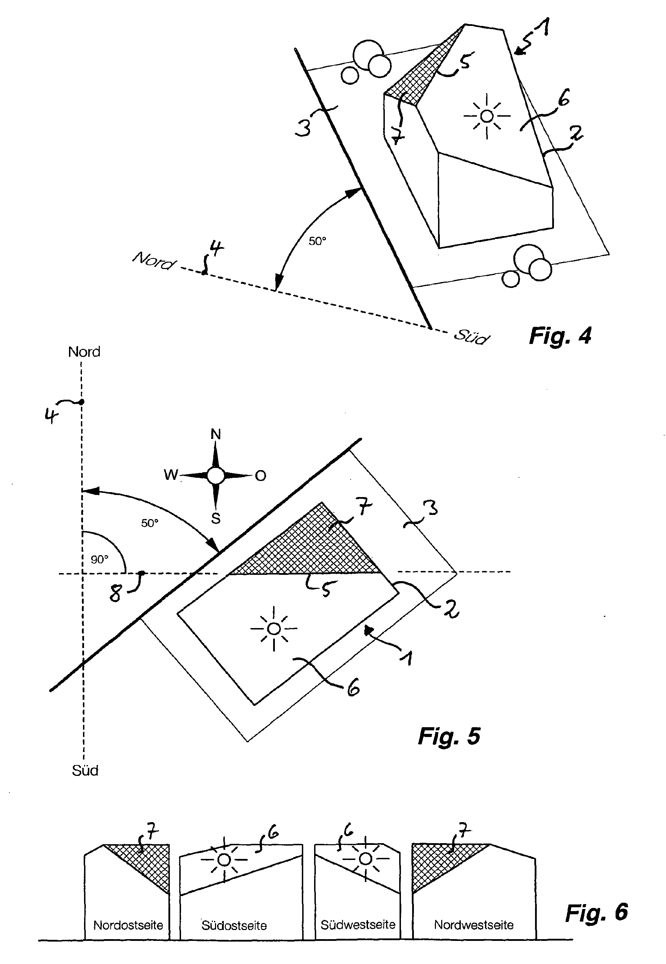

Die Figuren 4 bis 6 sowie 7 bis 9 zeigen jeweils ein weiteres Bauwerk 1 mit anders gestaltetem Dach 2 und entsprechender Dachstuhl-Konstruktion, wobei auch die Lage des Baukörpers hinsichtlich der Nord-Süd-Achse 9 unterschiedlich ist und die Ausrichtung der sonnenseitigen Dachfläche 6 jeweils an diese Lage angepasst und hinsichtlich des Sonneneinstrahlwinkels optimiert ist.

Die erfindungsgemäße Ausrichtung und Ausgestaltung eines Bauwerks und seines Daches lässt sich bei beliebigen Baukörper-Grundformen realisieren, beispielsweise auch bei einem Baukörper mit runder Grundfläche, welcher dann ein Dach mit einer einzigen, nach Süden ausgerichteten, ellipsoiden Dachfläche aufweist.

## Patentansprüche

1. Bauwerk (1) mit einem, zumindest ein Solarelement aufweisenden Dach (2), **dadurch gekennzeichnet, dass** zumindest ein, das wenigstens eine Solarelement aufweisende Teil (6) des Daches (2), unabhängig von der Lage, Ausrichtung und/oder Bauform des übrigen Baukörpers, in eine hinsichtlich des Sonneneinstrahlwinkels optimierte Richtung ausgerichtet ist, und dass dazu das Dach (2) einen Dachfirst (5) aufweist, der etwa in Ost-West-Richtung ausgerichtet ist.

2. Bauwerk nach Anspruch 1, **dadurch gekennzeichnet, dass** zumindest der das wenigstens eine Solarelement aufweisende Teil (6) des Daches (2), unabhängig von der Lage, Ausrichtung und/oder Bauform des übrigen Baukörpers, in einer hinsichtlich des Sonneneinstrahlwinkels optimierten Neigung ausgerichtet ist.

3. Bauwerk nach Anspruch 1 oder 2, **dadurch gekennzeichnet, dass** der Dachfirst (5) eine Dachfläche (6) begrenzt, die in eine hinsichtlich des Sonneneinstrahlwinkels optimierte Richtung ausgerichtet ist.

4. Bauwerk nach einem der Ansprüche 1 bis 3, **dadurch gekennzeichnet, dass** der Dachfirst (5) in Bezug auf den Baukörper außermittig versetzt angeordnet ist und/oder dass das Dach zumindest zwei Dachflächen (6, 7) aufweist und dass die in eine hinsichtlich des Sonneneinstrahlwinkels optimierte Richtung ausgerichtete Dachfläche (6) diejenige Dachfläche mit der größten Fläche ist.

5. Bauwerk nach einem der Ansprüche 1 bis 4, **dadurch gekennzeichnet, dass** der Dachfirst (5) hinsichtlich des Baukörpers in Richtung zur sonnenabgewandten Seite des Baukörpers versetzt angeordnet ist.

6. Bauwerk nach einem der Ansprüche 1 bis 5, **dadurch gekennzeichnet, dass** der Dachfirst (5) in Bezug auf die Längs- und/oder Querseiten des Baukörpers in eine vom rechten Winkel abweichende schräge Richtung ausgerichtet ist.
